# EUROPEAN PATENT SPECIFICATION

(11) **EP 4 371 812 B1**
(45) Date of publication and mention of the grant of the patent: **09.07.2025**
(21) Application number: 23464006.8
(22) Date of filing: 22.03.2023
(51) Int. Cl.: B60L 58/27, B60H 1/00, B60H 1/22, B60L 1/00, B60L 1/02, B60L 50/64, H01M 10/615, H01M 10/625, H01M 10/6568, H01M 10/663, B60L 8/00, H01M 10/44

(54) **SOLAR HEATING SYSTEM FOR THE MAINTAINING OF BATTERIES CHARGE**
SOLARHEIZUNGSSYSTEM ZUR AUFRECHTERHALTUNG DES BATTERIELADEZUSTANDS
SYSTÈME DE CHAUFFAGE SOLAIRE POUR LE MAINTIEN DE CHARGE DE BATTERIES

(30) Priority: 21.11.2022 RO 202200748
(43) Date of publication of application: 22.05.2024
(73) Proprietor: Stefan cel Mare University of Suceava, 720229 Suceava, County Suceava (RO)
(72) Inventor: Milici, Dan Laurentiu, Lisaura, Ipotesti, Suceava (RO); Bejenar, Ciprian, Suceava (RO); Nitan, Ilie, Ilisesti, Suceava (RO); Dimian, Mihai, Suceava (RO); Abu-Bandora, Mahmoud, Iksal, Downgall (IL); Alisavetei, Irina, Manastirea Humorului, Suceava (RO); Ifrim, Visarion-Catalin, Suceava (RO); Ungureanu, Constantin, Suceava (RO)

(56) References cited:
- CN-A- 106 314 188
- US-A1- 2009 286 459
- US-A1- 2015 360 568
- US-A1- 2021 221 252
- US-B1- 10 505 240

## Description

The invention refers to a solar heating system, integrable in the constructive structure of a vehicle, intended to maintain the temperature and/or charge level of the batteries it disposes of, so that the phenomenon is controlled through the specific constructive form that facilitates the conversion of solar energy, both in thermal energy as well as in electrical energy and because the system involves thermo-mechanical actuators with autonomous operation, suitable in the automatic regulation of this process.

In the purpose of exploiting the solar energy for heating and/or charging batteries, several solutions are known (CN101877364A, CN204368101U, CN108417909A) which consists, mainly, of an ensemble of components, devices and/or equipment for capturing solar energy and transforming, as the case may be, in thermal energy and/or electrical energy, so that, through conversion, they are used, as the case may be, in ensuring an optimal temperature and/or a stable charge level of the electrical energy storage elements (without being limited to them), which can discharge, degrade and/or destroy if exposed to low ambient temperatures.

Some of the disadvantages of the described solutions are related to that the ensembles of components, devices and/or equipment used to capture and harness solar energy composes complex hybrid systems in connection with exhaustible energy sources, which are made up of unsuitable combinations between thermal systems and/or electrical systems, that transfers through dedicated thermal pipes the thermal energy they capture, and the electrical energy they generates is used both for heating (through dedicated electrical resistances) and for power supplying with electrical energy, but in terms of the heating capacity of the elements for electrical energy storage, the process is precarious and inefficient at their extremities, and for these reasons it requires a complex control strategy, able to manage, as the case may be, the flow of thermal energy and/or electrical energy between all the component elements.

In the purpose of thermal energy management in electric vehicles, a solution is known (Document D1 - US10505240B1) that reveals relevant technical features [D1, column 3, 34-65], [D1, column 9, 20-35], [D1, figure 2], [D1, figures 4, 7], [D1, dependent claims 4, 8] for the subject-matter of the invention, which consists, mainly, of a battery that stores electrochemical energy, as well as phase-change materials, thermo-electric generators or an over-extending thermal energy harvesting skin/film that incorporates a photovoltaic cell, all being included and placed inside a thermal storage medium.

Some of the disadvantages of the described solution are related to that, it is not an adequate assembly for an eventual integration into an electric car roof, nor implies potential ramifications compatible with the vehicles chassis pillars, down to the beneath battery, whose charge and temperature such an apparatus might potentially assure, by providing both, electrical power and thermal heating in form of hot air, for preventing energy loss due coldness.

The invention solves, mainly, the technical problem in that it is adopted a specific ensemble of components that make up a simple and convenient system, which uses an inexhaustible energy source (solar energy) to intelligently maintain the temperature and/or charge level of a vehicle batteries, system that transfers thermal energy accumulated in hot air, used for heating and that produces electricity, used for its own power supply and/or for external charging, so that the heating capacity of the electrical energy storage elements is consolidated and efficient, because it also protects their extremities, and the control strategy it has is favorable, in that in operation the system is operated autonomously and the process is regulated automatically.

Solar heating system for the maintaining of batteries charge, according to the invention, it surprises the presented disadvantages and problems in it assumes, mainly, a particular constructive variant of a hybrid solar panel (thermal and photovoltaic) that can be integrated into the roof of a vehicle in order to prevent discharge, degradation and/or the destruction of the electrical energy storage elements it disposes of, so that it protects them against the risk of exposure to low temperatures, because it transforms solar radiation into thermal energy (hot air) and electrical energy, for which it has a thermal energy accumulator and a generator of electricity, in connection with mechanisms made of intelligent materials with shape memory (nitinol [NiTi]), which are autonomously driven and which automatically regulates, depending on the internal temperature of the system and the external temperature of the ambient environment, the warm air flow to the vulnerable elements that are maintained in optimal conditions through controlled thermal convection and continuous electrical power supply, without the use of exhaustible energy sources.

The invention has the following advantages:
- The system introduces new possibilities for hot air heating and/or electrical power supply, respectively for the adaptive maintaining of the temperature and/or charge level of the electrical energy storage elements of a vehicle, vulnerable to low temperatures;
- The system is simple, flexible and compatible with variable heating and/or electrical power supply needs, so that it has the form of a hybrid solar panel (thermal and photovoltaic) that provides both heat and electricity;
- The system is integrable into the constructive structure of the roof of a vehicle and is compatible with its constructive elements;
- The system has no negative impact on the aerodynamic shape of the vehicle, and its weight is minimized, because for the most part, its volume consists of air;
- The system does not depend on heat pipes and/or electrical resistances with dedicated destination, integrated within the electrical energy storage elements it protects;
- The system heats and/or maintains the temperature through controlled thermal convection, through which it forms an alveolus of warm air that thermally insulates the vulnerable elements and protects their extremities;
- The system ensures the production of electrical energy for its own consumption and the maintaining of the electrical power of elements in which it stores any surplus;
- The system improves the efficiency of the charging and/or electrical power supply systems of vehicles, because it reduces the number of charge/discharge cycles of the electrical energy storage elements and at the same time it reduces and/or covers the electrical energy losses, increases the lifetime and lowers their maintenance costs;
- The system is actuated autonomously and the control process is regulated automatically, without requiring additional input of energy or special maintenance.

Below is further given an embodiment of the invention in connection with the following figures:

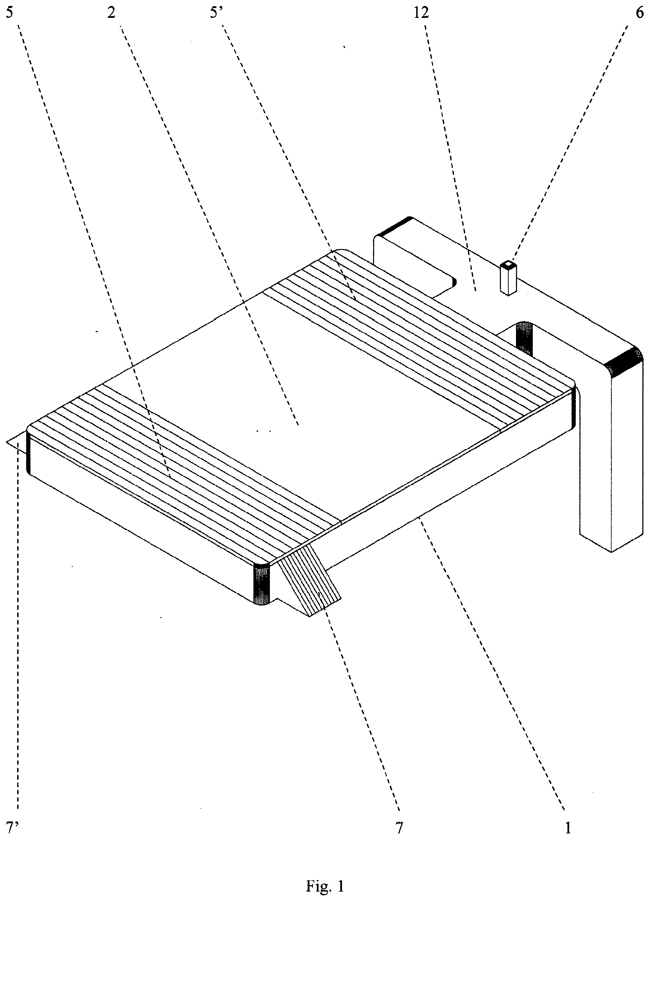

- Fig. 1 - Solar heating system (variant) for the maintaining of batteries charge, overview;

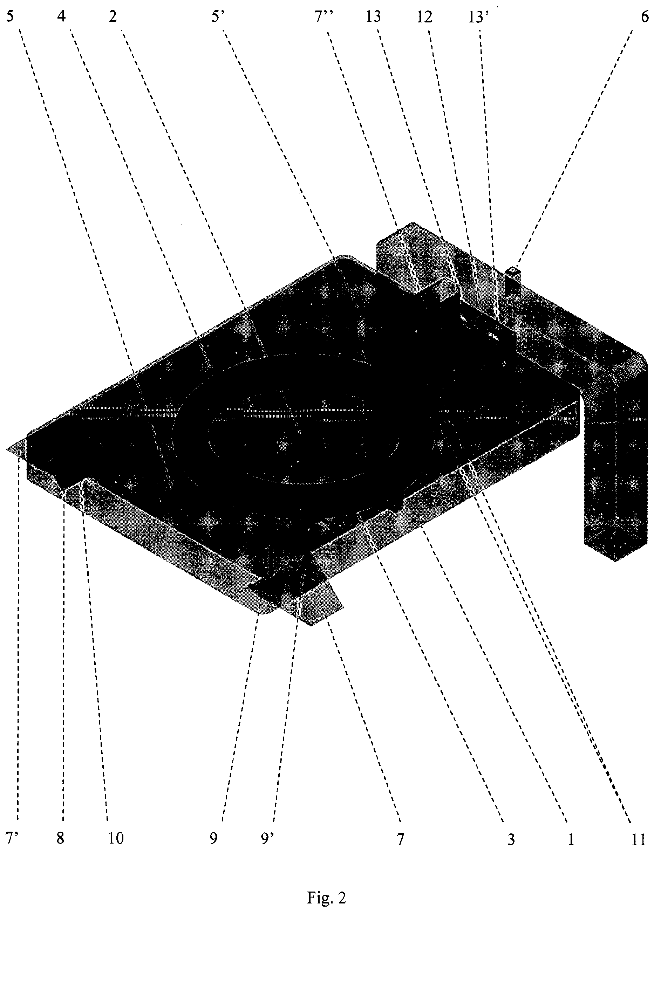

- Fig. 2 - Structure of a solar heating system (variant) for the maintaining of batteries charge;

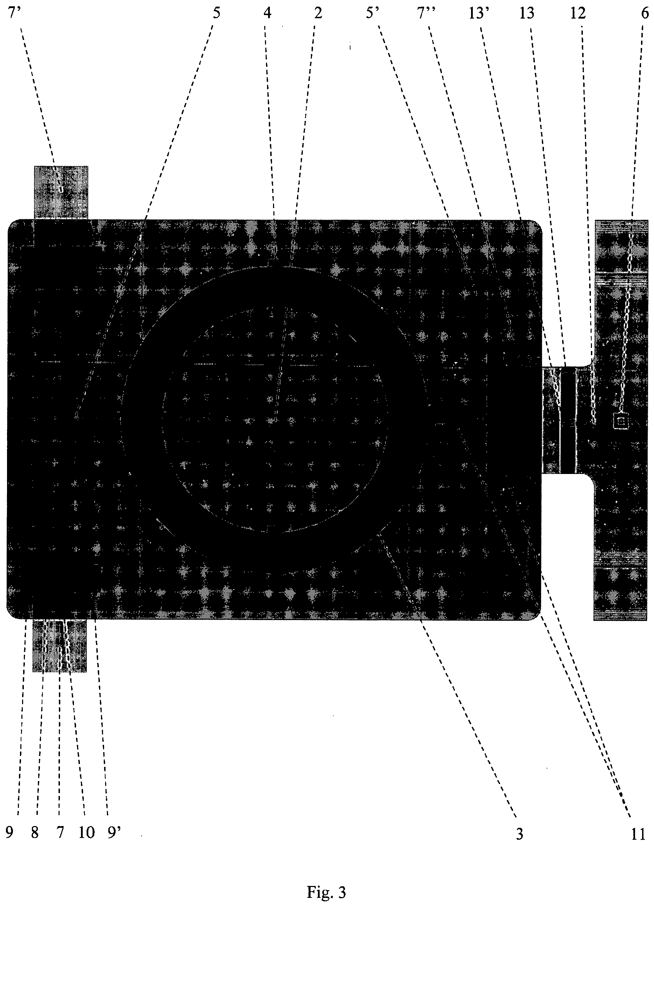

- Fig. 3 - Structure of a solar heating system (variant) for the maintaining of batteries charge, top view;

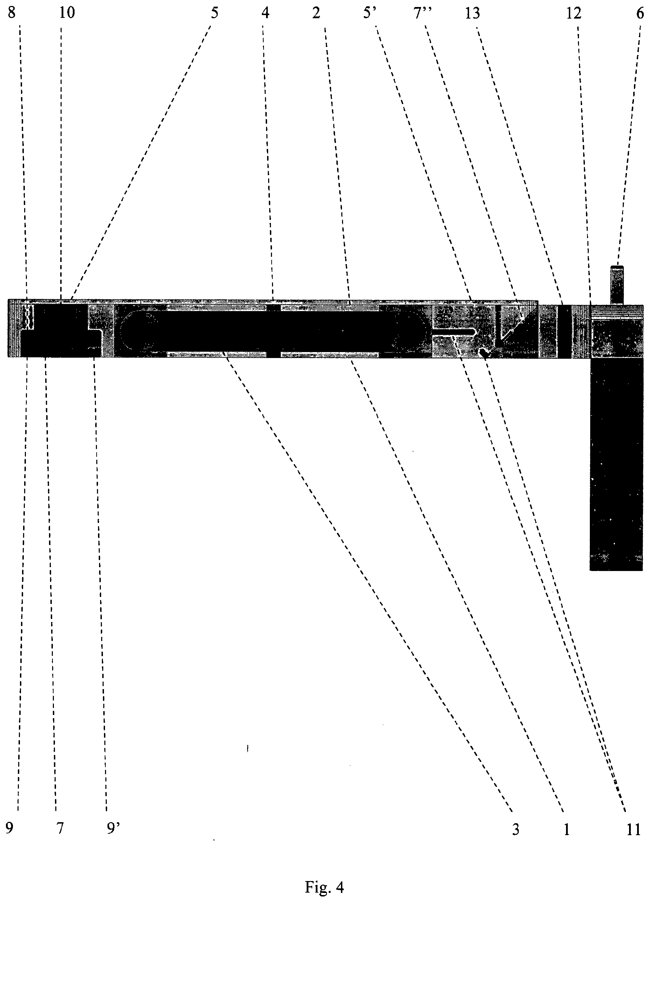

- Fig. 4 - Structure of a solar heating system (variant) for the maintaining of batteries charge, side view.

Solar heating system for the maintaining of batteries charge, is characterized mainly, in that it is composed of a main body 1, rectangular in shape, whose walls compose an air cavity in the form of a storage enclosure with black surfaces, capable to transform solar energy into thermal energy, so that the upper wall consists of a transparent panel 2, which allows direct exposure to solar radiation, to which is exposed a thermal accumulator with liquid 3, capable of accumulating the dissipated thermal energy on the black surfaces, suspended in the resistance structure 4, thermally conductive, which increases the radiant surface of the thermal accumulator with liquid 3 due to the contact with it, which is located between the upper part and the lower part of the accumulator enclosure, for which the upper wall of the main body 1, is provided, as the case may be, with two or more solar panels 5, 5', capable of converting solar energy into electrical energy, disposed both in the front side and in the back side of the accumulator enclosure, which it protects by shading them from direct exposure to solar radiation, but which are in an electrical connection with a thermostatic electrical contact 6, in the *normally open* position at high temperature, but also in electrical connection with the charging and/or power supplying system of the vehicle, and at the same time the main body 1, is provided in the front part, on the sides, as the case may be, with two or more inlet ways 7, 7', of a similar constructive form, each provided at the end with a mobile valve 8, with inward opening, in a *normally closed* position, maintained and regulated automatically, as the case may be, by two or more compression springs 9, 9', in a *normally compressed* position, fixed to the side wall of the main body 1, and made of elastic materials of metallic nature in connection, as appropriate, with one or more actuation springs 10, in a *normal uncompressed* position, fixed to the upper wall of the main body 1, and made of intelligent materials of metallic nature with the property of shape memory (nitinol [NiTi]), and at the same time the main body 1, is provided in the back part, as the case may be, with one or more exhaust ways 7", similar to the inlet ways 7, 7', each similarly provided with the same elements, but additionally, with the difference that they dispose of an electrical contact 11, in a *normally open* position, consisting of a conductive part on the mobile valve and a conductive part on the fixed resistance structure of the main body 1, which are in connection to the exhaust tube 12, inside which they are placed, as the case may be, two or more exhaust fans 13, 13', in a normal *unpowered* state, so that, together with the solar panels 5, 5', the thermostatic electrical contact 6, and the electrical contact 11, they form an electrical circuit for the controlled supply of thermal energy, respectively for the controlled evacuation of hot air from the main body 1, in the ramifications of the exhaust tube 12, to the air-conditioning circuit of the passenger compartment (secondary destination) and/or to each battery that the vehicle disposes of (main destination), in the purpose of maintaining their charge by ensuring the optimal temperature (thermal heating), and on the other hand, the solar panels 5, 5', are connected to the electrical circuit for power supplying the consumers (secondary destination), respectively to the electrical charging circuit of each battery that the vehicle disposes of (main destination), in the purpose of maintaining their charge by ensuring electrical power (electrical charging).

System for maintaining the battery charge, intended for integration into the roof structure of a vehicle, in the moment when the ambient temperature is sufficiently low (≤ 10 °C), the thermostatic electrical contact 6, is switched to *closed position,* the solar radiation is captured through the transparent panel 2, and accumulated in the thermal accumulator with liquid 3, and in the resistance structure 4, in the main body 1, and the solar panels 5, 5', generates electrical energy to the power supply electrical circuit of the consumers (secondary destination), respectively to the electrical charging circuit of each battery that the vehicle disposes of (main destination) and when the storage enclosure in the main body 1, becomes warm enough (> 18 °C), the intake ways 7, 7', and the exhaust ways 7", allows the circulation of the air flow, respectively each mobile valve 8, is regulated in *open position* by the actuation springs 10, which are primed in *compressed position* and which causes the elongation in *uncompressed position* of the compression springs 9, 9', and the mobile valve 8, switches the electrical contact 11, in *closed position,* through which the exhaust fans 13, 13', are connected in *powered* state and determines the exhaust of hot air in the exhaust tube 12, to the air-conditioning circuit of the passenger compartment (secondary destination) and/or to each battery that the vehicle disposes of (main destination), and when the storage enclosure in the main body 1 becomes cold enough, the intake ways 7, 7' and the exhaust ways 7" do not allow the circulation of the air flow, respectively, each mobile valve 8, is regulated in *closed position* by the actuation springs 10, which are released in *uncompressed position,* which causes the tighten in *compressed position* of the compression springs 9, 9', and, as the case may be, the mobile valve 8, switches the electrical contact 11, in *open position,* through which the exhaust fans 13, 13', are disconnected and determines the hot air flow to stop, and at the same time when the ambient temperature is sufficiently high (≥ 20 °C), the electrical contact thermostat 6, is switched to *open position,* solar radiation is captured through the transparent panel 2, and accumulated in the thermal accumulator with liquid 3, and in the resistance structure 4, from the main body 1, and the solar panels 5, 5', generates electrical energy only to the electrical charging circuit of each battery available in the vehicle (main destination) and when the storage enclosure in the main body 1, becomes sufficiently warm (> 18 °C), the intake ways 7, 7', and the exhaust ways 7", releases the hot air to outside to avoid overheating, respectively each mobile valve 8, is regulated in *open position* by the actuation springs 10, which are primed in *compressed position* and which determinates the elongation in *uncompressed position* of the compression springs 9, 9', and the mobile valve 8, switches the electrical contact 11, in *closed position,* but without feeding the exhaust fans 13, 13', and when the storage enclosure in the main body 1, becomes cold enough, the intake ways 7, 7', and the exhaust ways 7", do not allow the circulation of the air flow, respectively each mobile valve 8, is regulated in *closed position* by the actuation springs 10, which are released in *uncompressed position,* which causes the tighten in *compressed position* of the compression springs 9, 9', and, as the case may be, the mobile valve 8, switches the electrical contact 11, in *open position,* until the value of internal temperature allows to meet the need to intelligently maintain the batteries temperature, and the value of the ambient temperature imposes the need to maintain the battery charge.

Solar heating system for the maintaining of batteries charge, according to the invention, can be reproduced with the same performances and characteristics whenever is necessary, for any application compatible with it or parts thereof, a fact that constitutes an argument in favor of meeting the criterion of industrial applicability.

## Claims

1. Solar heating system for the maintaining of batteries composed of a main body (1), rectangular in shape, whose walls compose an air cavity in the form of a storage enclosure with black surfaces, for conversion of solar energy into thermal energy, wherein the upper wall consists of a transparent panel (2), directly exposing the solar radiation over a thermal accumulator with liquid (3), for accumulation of dissipated thermal energy on the black surfaces the thermal accumulator is suspended in a resistance structure (4) in the main body (1), the thermal accumulator and the resistance structure are thermally conductive such that the radiant surface of the thermal conductor with liquid due to the contact with the resistance structure and located between the upper part and the lower part of the main body (1), as well as the transparent panel (2), is provided with two or more solar panels (5), (5'), for conversion of solar energy into electrical energy, the system **characterized in that** both solar panels are disposed in the front side and in the back side of accumulator structure, both solar panels are in an electrical connection with a thermostatic electrical contact (6), in a *normally open* position at external temperature ≥ 20 °C, also both solar panels are in electrical connection with a separate battery and at the same time the main body (1), is provided in the front part, on the sides, with two or more inlet ways (7), (7'), each provided at the end with a mobile valve (8), with inward opening, in a *normally closed* position, maintained and regulated automatically, by two or more compression springs (9), (9'), in a *normally compressed* position, fixed to the side wall of the main body (1), and made of elastic materials of metallic nature in connection, with one or more actuation springs (10), in a *normally uncompressed* position due to an *inactive* state at internal temperature ≤ 18 °C, fixed to the upper wall of the main body (1), and made of intelligent materials of metallic nature with the property of shape memory, consisting of nitinol [NiTi], and at the same time the main body (1), is provided in the back part, with one or more exhaust ways (7"), configured as inlet ways (7), (7'), but with the difference that they dispose of an additional electrical contact (11), in a *normally open* position, consisting of a conductive part on the mobile valve and a conductive part on the fixed resistance structure of the main body, which are in connection to an (1), exhaust tube (12), containing two or more exhaust fans (13,13'), in a normally unpowered state, then together with the solar panels, the thermostatic electrical contact, and the electrical contact, they form an electrical circuit for the controlled supply of thermal energy, respectively for the controlled evacuation of hot air from the main body (1), through the exhaust tube (12), to a separate air-conditioning circuit for heating.

## Patentansprüche

1. Solares Heizsystem für die Wartung von Batterien, bestehend aus einem rechteckigen Hauptkörper (1), dessen Wände einen Lufthohlraum in Form eines Speichergehäuses mit schwarzen Oberflächen bilden, zur Umwandlung von Sonnenenergie in Wärmeenergie, wobei die obere Wand aus einer transparenten Platte (2) besteht, die die Sonnenstrahlung direkt auf einen Wärmespeicher mit Flüssigkeit (3) abgibt, zur Akkumulation abgeführter Wärmeenergie auf den schwarzen Flächen der Wärmespeicher in einer Widerstandsstruktur (4) in dem Hauptkörper (1) aufgehängt ist, der Wärmespeicher und die Widerstandsstruktur derart wärmeleitend sind, dass die strahlende Oberfläche des flüssigen Wärmeleiters durch den Kontakt mit der Widerstandsstruktur zwischen dem oberen Teil und dem unteren Teil des Hauptkörpers (1) liegt, sowie die transparente Platte (2) mit zwei oder mehr Solarzellenplatten (5), (5') zur Umwandlung von Sonnenenergie in elektrische Energie versehen ist, wobei das System **dadurch gekennzeichnet ist, dass** beide Solarzellenplatten an der Vorderseite und an der Rückseite der Akkumulatorstruktur angeordnet sind, beide Solarzellenplatten in einer elektrischen Verbindung mit einem thermostatischen elektrischen Kontakt (6) stehen, in einer normalerweise geöffneten Position bei einer Außentemperatur ≥ 20 °C stehen, auch beide Sonnenkollektoren in einer elektrischen Verbindung mit einer separaten Batterie stehen und gleichzeitig der Hauptkörper (1) im vorderen Teil an den Seiten mit zwei oder mehr Einlasswegen (7), (7') versehen ist, die jeweils am Ende mit einem beweglichen Ventil (8) versehen sind, mit Öffnung nach innen in einer normalerweise geschlossenen Position, die automatisch durch zwei oder mehr Druckfedern (9), (9') gehalten und reguliert wird, die in einer normalerweise komprimierten Position an der Seitenwand des Hauptkörpers (1) befestigt sind und aus elastischen Materialien metallischer Natur in Verbindung mit einer oder mehreren Betätigungsfedern (10) bestehen, in einer normalerweise nicht komprimierten Position aufgrund eines inaktiven Zustands bei einer Innentemperatur ≤ 18 °C, die an der oberen Wand des Hauptkörpers (1) befestigt ist und aus intelligenten Werkstoffen metallischer Natur mit der Eigenschaft des Formgedächtnisses hergestellt ist, die aus Nitinol [NiTi] bestehen, und gleichzeitig ist der Hauptkörper (1) im hinteren Teil mit einem oder mehreren Auslasskanälen (7") versehen, die als Einlasskanäle (7) konfiguriert sind, (7'), jedoch mit dem Unterschied, dass sie in einer normalerweise offenen Position über einen zusätzlichen elektrischen Kontakt (11) verfügen, der aus einem leitenden Teil auf dem beweglichen Ventil und einem leitenden Teil auf der festen Widerstandsstruktur des Hauptkörpers besteht, die mit einem Auslassrohr (12) in Verbindung stehen, das zwei oder mehr Auslassventilatoren (13), (13') enthält, in einem normalerweise stromlosen Zustand zusammen mit den Sonnenkollektoren, dem thermostatischen elektrischen Kontakt und dem elektrischen Kontakt einen Stromkreis für die kontrollierte Zufuhr von Wärmeenergie bzw. für die kontrollierte Ableitung von Warmluft aus dem Hauptkörper (1) durch das Abluftrohr (12) zu einem separaten Klimatisierungskreislauf für die Heizung bilden.

## Revendications

1. Système de chauffage solaire pour le maintien des batteries composé d'un corps principal (1), de forme rectangulaire, dont les parois composent une cavité d'air sous la forme d'une enceinte de stockage avec des surfaces noires, pour la conversion de l'énergie solaire en énergie thermique, où la paroi supérieure consiste en un panneau transparent (2), exposant directement le rayonnement solaire sur un accumulateur thermique avec du liquide (3), pour l'accumulation de l'énergie thermique dissipée sur les surfaces noires, l'accumulateur thermique est suspendu dans une structure de résistance (4) dans le corps principal (1), l'accumulateur thermique et la structure de résistance sont thermiquement conducteurs de sorte que la surface rayonnante du conducteur thermique à liquide, en raison du contact avec la structure de résistance, est située entre la partie supérieure et la partie inférieure du corps principal (1), ainsi que le panneau transparent (2), est équipé de deux ou plusieurs panneaux solaires (5), (5'), pour la conversion de l'énergie solaire en énergie électrique, le système étant **caractérisé par le fait que** les deux panneaux solaires sont disposés à l'avant et à l'arrière de la structure de l'accumulateur, les deux panneaux solaires étant reliés électriquement à un contact électrique thermostatique (6), en position normalement ouverte à une température extérieure ≥ 20 °C, les deux panneaux solaires sont également reliés électriquement à une batterie séparée et, en même temps, le corps principal (1) est pourvu dans la partie avant, sur les côtés, de deux ou plusieurs voies d'entrée (7), (7'), chacune pourvue à l'extrémité d'une vanne mobile (8), avec ouverture vers l'intérieur, en position normalement fermée, maintenue et régulée automatiquement, par deux ou plusieurs ressorts de compression (9), (9'), en position normalement comprimée, fixés à la paroi latérale du corps principal (1), et constitués de matériaux élastiques de nature métallique en liaison, avec un ou plusieurs ressorts d'actionnement (10), dans une position normalement non comprimée en raison d'un état inactif à une température interne ≤ 18 °C, fixé à la paroi supérieure du corps principal (1), et constitué de matériaux intelligents de nature métallique avec la propriété de mémoire de forme, consistant en nitinol [NiTi], et en même temps le corps principal (1), est pourvu dans la partie arrière, d'une ou plusieurs voies d'échappement (7"), configurées comme des voies d'entrée (7), (7'), mais avec la différence qu'ils disposent d'un contact électrique supplémentaire (11), en position normalement ouverte, constitué d'une partie conductrice sur la soupape mobile et d'une partie conductrice sur la structure de résistance fixe du corps principal, qui sont reliées à un tube d'échappement (12), contenant deux ou plusieurs ventilateurs d'échappement (13), (13'), dans un état normalement non alimenté, il s forment, avec les panneaux solaires, le contact électrique thermostatique et le contact électrique, un circuit électrique pour la fourniture contrôlée d'énergie thermique, respectivement pour l'évacuation contrôlée de l'air chaud du corps principal (1), à travers le tube d'échappement (12), vers un circuit de climatisation séparé pour le chauffage.
